# EUROPEAN PATENT APPLICATION

(11) **EP 3 889 405 A1**
(43) Date of publication of application: **06.10.2021**
(21) Application number: 20189237.9
(22) Date of filing: 03.08.2020
(51) Int. Cl.: F01N 3/20, F01N 3/28, B01J 20/00, B01J 29/00

(54) **EXTRUDED SCR WITH MULTIMODAL PORE SIZE DISTRIBUTION**

(30) Priority: 31.03.2020 US 202063002721 P
(71) Applicant: Johnson Matthey Catalysts (Germany) GmbH, 96257 Redwitz an der Rodach (DE)
(72) Inventor: BAUER, Juergen, 96257 Redwitz an der Rodach (DE); LANGBEIN, Martin, 96257 Redwitz an der Rodach (DE); MUENCH, Joerg, 96257 Redwitz an der Rodach (DE); LOPEZ-OROZCO, Sofia, 96257 Redwitz an der Rodach (DE); PIRAS, Irene, 96257 Redwitz an der Rodach (DE); AMOS-REICHERT, Nikki, 96257 Redwitz an der Rodach (DE); SCHEDEL, Hubert, 96257 Redwitz an der Rodach (DE)
(74) Representative: Wilson, Nicola Ann

(57) **Abstract**

An extruded, solid honeycomb body comprising a metal-promoted molecular sieve catalyst for converting oxides of nitrogen in the presence of a reducing agent, and comprising a multimodal pore size distribution.

## Description

### BACKGROUND

The invention relates to an extruded solid catalyst body for breaking down nitrogen oxides in the presence of a reducing agent. The invention further relates to a process for manufacturing the solid catalyst body.

It is known that a catalyst body with an active material such as a metal zeolite may be suitable for removal of nitrogen oxides through the process of selective catalytic reduction (SCR) in an oxygen-containing exhaust gas, like that of an internal-combustion engine operated with excess air, in particular a diesel engine. Such zeolite extrudate catalysts are often prepared with boehmites as ceramic binders. However, zeolite extrudate catalysts prepared using conventional low pore volume boehmites have been found to have limited porosity and therefore limited catalytic performance. Therefore, it is desired to produce a zeolite extrudate catalyst having improved catalytic performance.

### DETAILED DESCRIPTION

Catalysts, methods, and systems of the present invention relate to extruded, solid honeycomb bodies having a metal-promoted molecular sieve SCR catalyst. In some aspects, the extruded body is prepared with a high porosity binder precursor. Advantageously, the extruded body may have a multi-modal pore size distribution. It has been found that a metal-promoted molecular sieve extrudate with a multi-modal pore size distribution can result in enhanced accessibility, diffusion, and molecular sieve utilization properties and therefore improved catalytic performance compared to state of the art extruded catalysts.

Compositions and methods of aspects of the present invention will be described in further detail below.

### Metal-Zeolite

Extruded catalysts of the present invention may include a metal-promoted molecular sieve. In some aspects, the molecular sieve may have an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200); 10 to 100 (e.g. 10 to 30 or 20 to 80); 10 to 50; 10 to 30; 12 to 40; 15 to 30; 5 to 20; 5 to 15; 8 to 15; 8 to 13; 10 to 15; 10 to 20; 10 to 40; 10 to 60; 10 to 80; 10 to 100; 10 to 150; < 30; < 20; < 15; or < 13. In some aspects, a suitable molecular sieve has a SAR of > 200; > 600; or > 1200. In some aspects, the molecular sieve has a SAR of from about 1500 to about 2100.

In some aspects, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve may be a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

In some aspects, the molecular sieve may be mesoporous. A mesoporous molecular sieve has pores with a diameter between 2 and 50 nm (e.g. in accordance with the IUPAC definition of "microporous").

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. In some aspects, the small pore molecular sieve has a framework structure selected from the group consisting of CHA, LEV, AEI, AFX, ERI, LTA, SFW, KFI, DDR and ITE. In some aspects, the small pore molecular sieve has a framework structure selected from the group consisting of CHA, AEI, and AFX. In some aspects, the small pore molecular sieve has a framework structure selected from the group consisting of CHA and AEI. The small pore molecular sieve may have a CHA framework structure. The small pore molecular sieve may have an AEI framework structure.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI and WEN, or a mixture and/or an intergrowth of two or more thereof. In some aspects, the medium pore molecular sieve has a framework structure selected from the group consisting of FER, MEL, MFI, and STT. In some aspects, the medium pore molecular sieve has a framework structure selected from the group consisting of FER and MFI, particularly MFI. When the medium pore molecular sieve is a zeolite and has an FER or MFI framework, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. In some aspects, the large pore molecular sieve has a framework structure selected from the group consisting of AFI, BEA, MAZ, MOR, and OFF. In some aspects, the large pore molecular sieve has a framework structure selected from the group consisting of BEA, MOR and FAU. When the large pore molecular sieve is a zeolite and has a BEA, FAU or MOR framework, then the zeolite may be a beta zeolite, faujasite, zeolite Y, zeolite X or mordenite.

A metal-promoted molecular sieve catalyst may comprise a metal and a molecular sieve. Metal may be included in the molecular sieve, for example, via ion exchange, impregnation or isomorphous substitution; preferably via ion exchange. The metal may be selected from Cu, Fe, Ce, Mn, V, Zn, Mo, Pt, Pd, Rh, Ir, and Ni, and combinations thereof. Iron, copper, and manganese may be particularly preferred. In some aspects, an metal-promoted molecular sieve may comprise Cu and Mn; Cu and Fe; Fe and Mn; Cu; Fe; or Mn. An SCR catalyst may include a metal/molecular sieve catalyst such as, for example, iron/beta zeolite, copper/beta zeolite, copper/CHA, copper/manganese/CHA, copper/SSZ-13, copper/manganese/SSZ-13, copper/SAPO-34, copper/AEI, copper/manganese/AEI, iron/ZSM-5, or copper/ZSM-5. In some aspects, the molecular sieve may comprise an AEI zeolite, a beta zeolite, a ferrierite, or a chabazite. Preferred SCR catalysts may include Fe-CHA, Fe-AEI, Mn-CHA, Mn-BEA, Mn-FER, Mn-MFI, Cu-AEI, Cu-Mn-AEI, Cu-Mn-CHA, Cu-CHA, such as Cu-SSZ-13, and Fe-Beta zeolite.

In some aspects, it is preferred that the total wt% of metal promoter such as exchanged metal in the molecular sieve is about 1.0 wt % to about 5.0 wt% (inclusive) metal, such as about 2.0 to about 4.0 wt% (inclusive), most preferably about 2.5 to about 3.5 wt% (inclusive). The quantity of metal promoter in the metal-promoted molecular sieve can be expressed as an atomic ratio of metal to aluminium. When the promoter metal comprises copper, preferably, the atomic ratio of copper to aluminium is 0.06-1.22.

### Binder

Extruded catalysts are generally prepared with a binder material to "bind" the catalyst composition together; the binder may serve to hold the catalyst composition in a desired shape and/or provide the catalyst composition with particular desired rheological characteristics. Typically, alumina (Al₂O₃) is a preferred binder for extruded molecular sieve catalysts for reasons of strength and also commercial availability of numerous suitable boehmite starting materials (Catapal, Versal, Pural, and the like) which extrude well and yield gamma-alumina upon calcination. Typically, conventional boehmite starting materials are low-pore-volume.

It has surprisingly been found that use of a high-pore-volume binder precursor may result in an extruded catalyst having an increased pore volume and a multimodal pore size distribution, resulting in enhanced catalytic properties.

In some aspects, an extruded catalyst may be prepared with a binder precursor comprising a high porosity binder precursor. Suitable high pore volume binder precursors may include, for example, high-pore-volume boehmites.

In some aspects, a binder precursor may include a high porosity binder precursor and a low porosity binder precursor. In some aspects, a suitable low porosity binder precursor may include low-pore-volume boehmite.

In some aspects, a binder or binder precursor may include a clay, e.g. alumina and/or glass fibers.

In some aspects, an extruded catalyst according to the invention comprises inorganic fibers. An advantage of using inorganic fibers may be to improve extrudability, to maintain the shape of the part during drying (although this may not be necessary if microwave drying is used, because microwave drying is quicker), but primarily for stability of the product (i.e. fiber reinforcement) which can enable extrusion of longer parts and/or parts having a wider cross section and/or for use in applications where the catalyst may be shaken, e.g. vehicular uses.

In some aspects, the inorganic fibers are E-glass fibers or basalt fibers. E-glass fibers can be defined as alumino-borosilicate glass with less than 1% w/w alkali oxides. Basalt fiber is a material made from extremely fine fibers of basalt, which is composed of the minerals plagioclase, pyroxene, and olivine.

A length of the inorganic fibers selected for use can be a compromise between improved extrudability and improved product stability, i.e. shorter fibers improves extrudability but reduces stability and vice versa. Preferably, however, a fiber length distribution present in the extruded, solid honeycomb body of the present invention is from 150 to 700 µm (Gaussian distribution), preferably from 200 to 500 µm with a mean of approximately 300 µm. Such fiber lengths can be introduced in practice by adding fibers of longer lengths, e.g. of approximately 6 mm or approximately 1 mm by pre-milling the 6 mm long lengths, to a plastic mixture according to a method of manufacture of the invention and then using various mixing parameters to achieve the desired fiber length distribution in the finished product. Such mixing parameters can include the selection of mixing blade, mixing blade speed, a gap between the blades, use of a kneader or a twin kneader instead of blades, water content of the mixture, duration of mixing etc.

### Coating

In some aspects, extruded catalysts can be coated with a catalytic coating. One or more catalytic coating can be for oxidizing NH₃ to N₂. Such a catalyst is often called an ammonia slip catalyst or ASC. Suitable ASCs can comprise a relatively low loading, such as 14.2-28.3 g/l (0.5-10 g/ft³), of platinum group metal, e.g. platinum or both platinum and palladium, supported on a suitable particulate metal oxide support material, such as alumina. In a particularly preferred ASC, the relatively low loading of platinum group metal/particulate metal oxide support material is applied in a first layer directly on a surface of the extruded solid honeycomb body, and a catalytic coating for converting NOx using a nitrogenous reductant, i.e. a selective catalytic reduction catalyst, is applied as a second layer directly on the first layer. The selective catalytic reduction (SCR) catalyst can be, for example, a vanadia-based SCR catalyst such as V₂O₅/TiO₂ or V₂O₅/WO₃/TiO₂; or a molecular sieve promoted with a transition metal, such as copper and/or iron. The preferred, two layer arrangement promotes greater selectivity for N₂.

So as not to interfere with a primary purpose of the extruded, solid honeycomb body, which is for converting oxides of nitrogen in the presence of a reducing agent, the ASC is preferably coated on a zone to be disposed to a downstream side of an exhaust system when in use. The zone is of substantially uniform length defined at one end by a first end of the extruded, solid honeycomb body and at another end by a length to a maximum of 50% (≤40% or ≤30% such as ≤20%) of a total length of the extruded, solid honeycomb body measured from the first end.

In some aspects, one or more catalytic coating can be for converting NOx using a nitrogenous reductant, i.e. a selective catalytic reduction (SCR) catalyst. The SCR catalyst can be, for example, a vanadia-based SCR catalyst such as V₂O₅/TiO₂ or V₂O₅/WO₃/TiO₂; or a molecular sieve, preferably an aluminosilicate zeolite, promoted with a transition metal, such as copper and/or iron. Preferably, a copper and/or iron promoted molecular sieve catalyst is used, in which case the catalyst can be the same as or different from the extruded catalyst. Preferred molecular sieves include those having the CHA, AEI, FER, MFI or BEA crystal structures. Small pore molecular sieves, i.e. those having a maximum ring size of eight tetrahedral atoms, are preferred.

The ASC and the SCR catalyst coatings can be combined, wherein a zone intended to be disposed to an upstream side in an exhaust system when in use can be coated with the SCR catalyst and a zone intended to be disposed to a downstream side when in use can be coated with the ASC. Preferably there is no gap between the SCR catalyst coating and the ASC.

### Method

Extruded catalysts of aspects of the present invention may be prepared by mixing starting materials of a zeolite and a high porosity binder precursor; extruding the mixture into a catalyst body; and drying the catalyst body and calcining to form a solid catalyst body. In some aspects, quantitative proportions of the starting materials may be selected such that the solid catalyst body contain a desired wt% of an ion-exchanged zeolite containing at least one metal, as well as desired amounts of other components.

In some aspects, the calcining step is performed at a temperature between 550°C and 650°C.

In some aspects, an extruded catalyst of the present invention may be prepared as described herein, with further processing steps as described in WO2015/110822, which is incorporated in its entirety herein.

### Pore Volume/Porosity and Pore Size Distribution

Extruded catalysts of the present invention may have a multimodal pore size distribution. In some aspects, an extruded catalyst includes at least two pore size distributions, each pore size distribution possessing a different mean pore size. In some aspects, an extruded catalyst includes a first mode of pores comprising at most 50 % of a total pore volume and a second mode of pores comprising at least 50 % of the total pore volume.

Extruded catalysts of aspects of the present invention have also been found to have an increased pore volume.

It is believed that use of the binder precursors as described herein results in these unique pore size distributions, and it has been found that a metal-promoted molecular sieve extrudate with a multi-modal pore size distribution can result in enhanced accessibility, diffusion, and molecular sieve utilization properties and therefore improved catalytic performance compared to state of the art extruded catalysts.

In comparison to SCR catalyst compositions containing conventional binders, it has been surprisingly found that the SCR catalyst composition of the present invention may exhibit improved SCR catalytic activity. Without being bound by theory, it is considered that the improved catalytic activity is a result of improved access to catalytic sites within the SCR catalyst composition due to the porosity characteristics of the extruded catalyst.

The pore size distribution of the extruded catalyst is determined using, for example, a nitrogen sorption technique or mercury intrusion porosimetry (MIP). Such a technique is well known in the art. The pore size distribution may have a number of peaks, i.e. be multimodal, but at least has two peaks and in some aspects may be essentially a bimodal distribution, i.e. at least 80% (preferably 90%) by volume of the pores are associated with the two peaks. In some aspects, substantially all of the pores are associated with the two peaks. In some aspects, it is preferred that the first and second peaks are relatively clearly defined, that is, the standard deviation from the modal values (the highest points in each peak) is relatively low. In relation to the pore size distribution, in accordance with the IUPAC definition, the term "macroporous" means that the pore diameter is greater than 50, the term "mesoporous" means that the pore diameter is from 2 to 50 nm, and the term "microporous" means that the pore diameter is less than 2 nm.

In some aspects, an extruded catalyst contains both macropores, mesopores and micropores. The macropores, mesopores may be formed between disordered delaminated layers, and the micropores may be provided in the disordered delaminated layers themselves. Such a structure is sometimes referred to as a "house of cards" structure.

In some aspects, the multimodal pore size distribution is bimodal. Substantially restricting the pores of the extruded catalyst to being either: (i) macroporous, mesoporous, or (ii) microporous may provide the SCR catalyst composition with a high level of access to catalytic sites and a high catalytic activity.

In some aspects, the first modal maximum preferably has a macroporous and/or mesoporous pore size. The presence of a high number of macropores may increase the access of species to be treated (e.g. gaseous species in an exhaust gas) to catalytic sites within the SCR catalyst composition.

### Benefits

Extruded catalysts of the present invention may provide enhanced catalytic properties as compared to conventional extruded catalysts. Without being bound by theory, it is considered that the improved catalytic activity is a result of improved access to catalytic sites within the catalyst composition due to the porosity characteristics of the material.

### System

In some aspects, an extruded, solid honeycomb body as described herein can be included within an exhaust system. The exhaust system preferably comprises an injector for injecting a nitrogenous reductant into a flowing exhaust gas upstream of the extruded, solid honeycomb body. However, NH₃ can also be generated *in situ* by contacting an upstream NOx absorber catalyst with a rich exhaust gas, such as is periodically generated to regenerate a NOx absorber catalyst, e.g. Ba(NO₃)₂ + 8H₂ → BaO + 2NH₃+5 H₂O.

An exhaust system can also comprise an oxidation catalyst or a NOx absorber catalyst for *inter alia* oxidizing nitrogen monoxide to nitrogen dioxide disposed on a separate substrate upstream of the extruded, solid honeycomb body. SCR catalysts catalyze the reactions of (i) 4NH₃ + 4NO + O₂ → 4N₂ + 6H₂O (i.e. 1:1 NH₃:NO); (ii) 4NH₃ + 2NO + 2NO₂ → 4N₂ + 6H₂O (i.e. 1:1 NH₃:NOx; and (iii) 8NH₃ + 6NO₂ → 7N₂ + 12H₂O (i.e. 4:3 NH₃:NOx). Reaction (ii) is quickest and promotes low temperature NOx reduction. Reaction (i) is next quickest. In order to obtain NO₂ to promote reaction (ii) it can be desirable to oxidize NO to NO₂ upstream of the extruded, solid honeycomb body according to the invention.

## Claims

1. An extruded, solid honeycomb body comprising a metal-promoted molecular sieve catalyst for converting oxides of nitrogen in the presence of a reducing agent, and comprising a multimodal pore size distribution.

2. The extruded, solid honeycomb body of claim 1, comprising at least two pore size distributions, each pore size distribution possessing a different mean pore size.

3. The extruded, solid honeycomb body of claim 1, wherein a first mode of pores comprises at most 50 % of a total pore volume and a second mode of pores comprises at least 50 % of the total pore volume.

4. The extruded, solid honeycomb body of claim 1, wherein the honeycomb body is prepared with a binder precursor comprising a high porosity binder precursor.

5. The extruded, solid honeycomb body of claim 4, wherein the high porosity binder precursor comprises high-pore-volume boehmite.

6. The extruded, solid honeycomb body of claim 4, wherein the binder precursor further comprises a low porosity binder precursor.

7. The extruded, solid honeycomb body of claim 6, wherein the low porosity binder precursor comprises low pore volume boehmite.

8. The extruded, solid honeycomb body of claim 1, wherein the molecular sieve is ion-exchanged with the metal.

9. The extruded, solid honeycomb body of claim 1, wherein the metal comprises Cu, Fe, Mn, and combinations thereof.

10. The extruded, solid honeycomb body of claim 1, wherein the metal comprises Cu.

11. The extruded, solid honeycomb body of claim 1, wherein the metal comprises Cu and Mn.

12. The extruded, solid honeycomb body of claim 1, wherein the molecular sieve is a small-pore molecular sieve.

13. A method of preparing an extruded, solid honeycomb body comprising a metal-promoted molecular sieve catalyst for converting oxides of nitrogen in the presence of a reducing agent, the method comprising:
a. mixing starting materials of a molecular sieve and a binder precursor comprising a high porosity binder precursor;
b. extruding the mixture into a catalyst body; and
c. drying the catalyst body and calcining to form a solid catalyst body.

14. The method of claim 13, further comprising selecting quantitative proportions of the starting materials such that the solid catalyst body contains a desired wt% of an ion-exchanged zeolite containing at least one metal.

15. The method of claim 13, wherein the binder precursor further comprises a low porosity binder precursor.
